**Europäisches Patentamt**

**European Patent Office**

**Office européen des brevets**

(19)

(11) Numéro de publication : **0 508 902 A1**

# (12) DEMANDE DE BREVET EUROPEEN

(21) Numéro de dépôt : **92401004.4**

(22) Date de dépôt : **09.04.92**

(51) Int. Cl.$^5$ : **B60B 37/10, E05C 1/10**

(30) Priorité : **09.04.91 FR 9104308**

(43) Date de publication de la demande :
**14.10.92 Bulletin 92/42**

(84) Etats contractants désignés :
**AT BE CH DE DK ES FR GB GR IT LI LU MC NL PT SE**

(71) Demandeur : **COMPAGNIE PLASTIC OMNIUM**
**Société Anonyme dite:**
**19, avenue Jules Carteret**
**F-69007 Lyon (FR)**

(72) Inventeur : **Michelutti, Patrice**
**Lot La Charmotte**
**F-52200 Humes (FR)**

(74) Mandataire : **Leszczynski, André et al**
**CABINET NONY & CIE. 29 rue Cambacérès**
**F-75008 Paris (FR)**

(54) **Dispositif de montage de roue à nez sur un axe de roue.**

(57) L'invention est relative à un dispositif de montage d'une roue à nez comprenant un moyeu relié par un voile à une jante portant une bande de roulement et un bonhomme à ressort monté mobile radialement dans une cavité dudit voile en étant soumis à l'action d'un ressort disposé dans ladite cavité, ledit axe de roue comportant une gorge périphérique au voisinage de son extrémité pour la réception par encliquetage dudit bonhomme à ressort lors du montage de la roue sur l'axe.

Ledit voile (6) comporte dans au moins une de ses parois, un orifice (14) permettant l'accès au bonhomme à ressort (9,10) pour déplacer celui-ci radialement dans ladite cavité (11) du voile de manière à le dégager de ladite gorge périphérique (13) dudit axe de roue (4), et le bonhomme à ressort comporte au moins une patte (15) en saillie traversant ledit orifice 14 agencé en forme de fente dans la paroi du voile.

FIG. 2

EP 0 508 902 A1

La présente invention est relative à un dispositif de montage d'une roue à nez sur un axe de roue, en particulier de roue de bac roulant de manutention ou de collecte de déchets industriels ou ménagers.

Dans les dispositifs de montage actuellement utilisés, en particulier dans les bacs roulants pour la collecte mécanisée des ordures ménagères, il est prévu un bonhomme à ressort monté sur le moyeu de la roue et apte à s'engager par encliquetage dans une gorge périphérique de l'axe réalisé au voisinage de son extrémité, ce qui assure l'immobilisation axiale de la roue sur son axe. La gorge peut être réalisée sur l'axe lui-même notamment dans la cas d'axes pleins ou sur une pièce telle qu'un embout rapporté sur l'axe au moins en partie tubulaire, comme décrit par exemple dans le brevet FR-A-2 519 587 de la société déposante.

Une fois le bonhomme à ressort engagé dans la gorge correspondante de l'axe, il ne peut plus en être dégagé de telle sorte que la roue se trouve fixée de manière indémontable sur l'axe.

L'avantage le cette configuration est que le vol de la roue est empêché.

L'inconvénient est qu'une roue ne peut être démontée qu'en la détruisant.

La présente invention se propose de réaliser par des moyens particulièrement simples et économiques un dispositif permettant un démontage d'une roue à nez sans destruction de celle-ci.

La présente invention a pour objet un dispositif de montage d'une roue à nez sur un axe de roue, ladite roue à nez comprenant un moyeu relié par un voile à une jante portant une bande de roulement et un bonhomme à ressort monté mobile radialement dans une cavité dudit voile en étant soumis à l'action d'un ressort disposé dans ladite cavité, ledit axe de roue comportant une gorge périphérique au voisinage de son extrémité pour la réception par encliquetage dudit bonhomme à ressort lors du montage de la roue sur l'axe, caractérisé par le fait que ledit voile comporte dans au moins une de ses parois, un orifice permettant l'accès au bonhomme à ressort pour déplacer celui-ci radialement dans ladite cavité du voile de manière à le dégager de ladite gorge périphérique dudit axe de roue, et que le bonhomme à ressort comporte au moins une patte en saillie traversant ledit orifice agencé en forme de fente dans la paroi du voile.

De préférence, le bonhomme à ressort comporte une tête de diamètre élargi, la zone de transition entre la tête et le corps du bonhomme à ressort étant disposée, en position montée de la roue sur l'axe, en regard dudit orifice.

Selon l'invention, il suffit de saisir la patte en saillie, manuellement ou à l'aide d'un outil, et la faire coulisser radialement pour dégager le bonhomme à ressort de la gorge périphérique dudit axe de roue.

L'orifice permettant l'accès au bonhomme à ressort est de préférence ménagé sur la face du voile située du côté intérieur de la roue. Cette disposition a pour avantage d'éviter qu'un tiers mal intentionné ne s'aperçoive que la roue est démontable et ne soit donc tenté de la démonter. On peut cependant selon l'invention prévoir un orifice sur le côté extérieur ou encore un orifice sur chaque côté du voile.

Dans le but de mieux faire comprendre l'invention on va maintenant en décrire à titre d'exemples nullement limitatif deux modes de réalisation en se référant au dessin annexé dans lequel :

  – la figure 1 est une vue en élévation, en coupe partielle d'un bac roulant utilisant, pour le montage des roues, un dispositif selon l'invention,
  – la figure 2 est une vue en élévation et coupe partielle d'une roue à nez montée sur un axe en utilisant le dispositif selon l'invention.

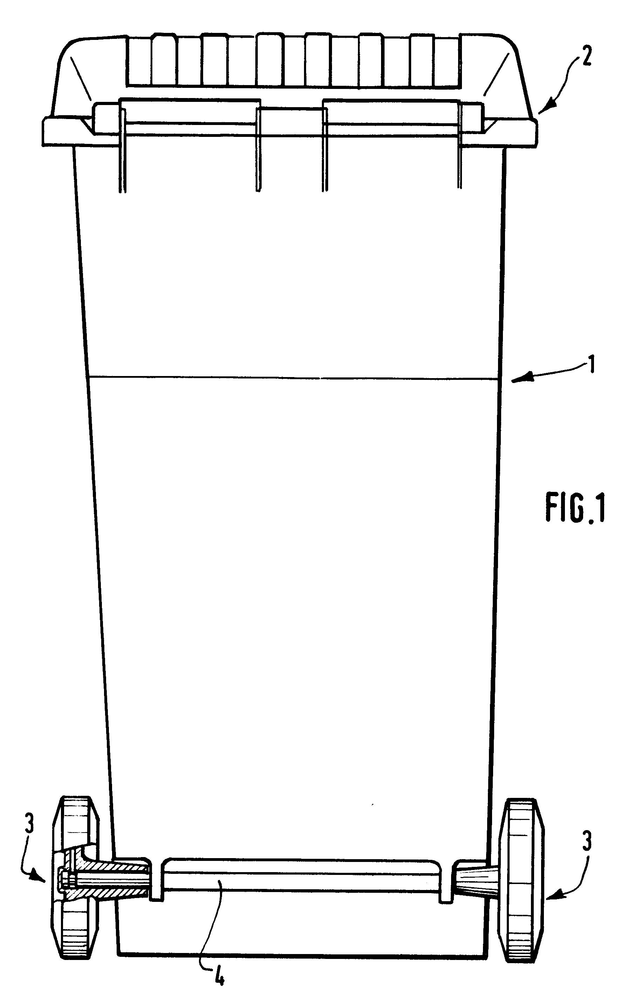

En se référant à la figure 1, on voit un bac roulant utilisable notamment pour la collecte mécanisée des ordures ménagères.

De tels bacs sont fabriqués et distribués en différentes contenances par la société déposante.

Le bac comporte une cuve 1 à la partie supérieure de laquelle est articulé un couvercle 2, ladite cuve étant mobile par l'intermédiaire de roues 3 montées aux extrémités d'un axe 4 à la partie inférieure de la cuve.

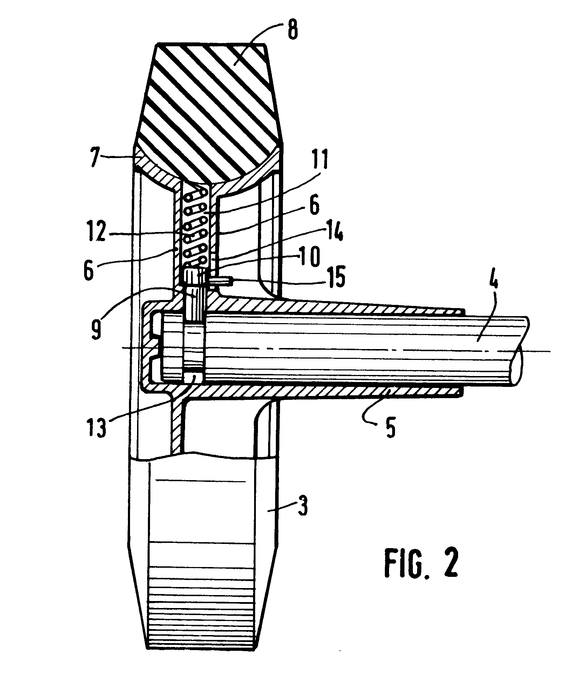

On va maintenant se référer plus particulièrement à la figure 2 qui illustre le dispositif de montage selon l'invention d'une roue 3 sur un axe de roue 4.

La roue 3 comporte un moyeu 5 se prolongeant radialement vers l'extérieur par une voile 6 et une jante 7 portant une bande le roulement 8.

La roue comporte un bonhomme à ressort 9 présentant une tête de plus grand diamètre 10 montée mobile radialement dans une cavité 11 du voile 6, cavité dans laquelle est également monté un ressort hélicoïdal 12 s'appliquant sur la tête 10 du bonhomme à ressort 9.

Pour la fixation de la roue 3 sur l'axe 4, l'extrémité inférieure du bonhomme à ressort 9 s'engage dans une gorge périphérique 13 de l'axe 4.

Dans la paroi intérieure du voile 6 il est prévu une fente 14 et le bonhomme à ressort 9 est pourvu, dans sa partie de tête élargie, dans le mode de réalisation illustré, d'une patte 15 en saillie vers l'extérieur du voile et traversant la fente 14.

On comprend que pour extraire une roue de l'axe, il suffit de repousser, vers le haut sur le dessin, la patte 15 dans la fente 14, ce qui provoque le dégagement du bonhomme à ressort de sa gorge de réception 13 de l'axe de roue.

Dans le mode de réalisation illustré, la fente 14 est réalisée sur une face intérieure du voile.

Il est bien entendu possible de réaliser également une fente sur la face opposée du voile, c'est-à-dire celle tournée vers l'extérieur ou encore une fente sur les deux faces du voile.

Bien que l'invention ait été décrite en liaison avec un mode de réalisation particulier, il est bien évident qu'elle n'y est nullement limitée et qu'on peut lui apporter différentes variantes et modifications sans pour autant sortir ni de son cadre ni de son esprit.

## Revendications

1. Dispositif de montage d'une roue à nez sur un axe de roue, ladite roue à nez comprenant un moyeu relié par un voile à une jante portant une bande de roulement et un bonhomme à ressort monté mobile radialement dans une cavité dudit voile en étant soumis à l'action d'un ressort disposé dans ladite cavité, ledit axe de roue comportant une gorge périphérique au voisinage de son extrémité pour la réception par encliquetage dudit bonhomme à ressort lors du montage de la roue sur l'axe, caractérisé par le fait que ledit voile (6) comporte dans au moins une de ses parois, un orifice (14) permettant l'accès au bonhomme à ressort (9,10) pour déplacer celui-ci radialement dans ladite cavité (11) du voile de manière à le dégager de ladite gorge périphérique (13) dudit axe de roue (4), et nue le bonhomme à ressort comporte au moins une patte (15) en saillie traversant ledit orifice 14 agencé en forme Le fente dans la paroi du voile.

2. Dispositif selon la revendication 1, caractérisé par le fait que le bonhomme à ressort comporte une tête (10) de diamètre élargi.

3. Dispositif selon l'une quelconque des revendications précédentes, caractérisé par le fait que ledit orifice (14) est ménagé sur la face du voile située du côté intérieur de la roue.

FIG.1

FIG. 2

**Office européen des brevets**

# RAPPORT DE RECHERCHE EUROPEENNE

Numero de la demande

EP    92 40 1004

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-U-8 704 624 (TENTE-ROLLEN)<br>* page 8, ligne 5 - page 9, ligne 10 *<br>* page 11, ligne 15 - page 12, ligne 14; figures 1,2 *<br>--- | 1,2,3 | B60B37/10<br>E05C1/10 |
| Y | CH-A-202 801 (RAMELET FRERES)<br>* page 1, colonne de gauche, ligne 24 - colonne de droite, ligne 13; figure 1 *<br>--- | 1,2,3 | |
| Y | DE-U-8 702 945 (MERCOM)<br>* page 8, ligne 14 - ligne 28; figures 1,2,5 *<br>--- | 1,2 | |
| Y | US-A-1 720 593 (GEISER)<br>* page 1, ligne 82 - ligne 108; figures 1-4 *<br>--- | 1,2 | |
| Y | DE-U-8 507 012 (TENTE-ROLLEN)<br>(La partie interieure de la roue comporte une orifice au même niveau de la tête du pêne)<br>* figure 1 *<br>--- | 1,2,3 | |
| Y | FR-A-565 167 (OLSEN)<br>* page 2, ligne 23 - ligne 35; figure 4 *<br>--- | 1,2,3 | **DOMAINES TECHNIQUES RECHERCHES (Int. Cl.5)** |
| A | DE-U-8 628 385 (FILIPP)<br>* page 7, ligne 27 - page 8, ligne 30; figures 1-9 *<br>--- | 1,2 | B60B<br>A61G<br>F16B |
| A | US-A-3 724 889 (DOOLEY)<br>* colonne 2, ligne 57 - ligne 66; figures 1,2 *<br>----- | 1 | E05B<br>E05C |

Le présent rapport a été établi pour toutes les revendications

| Lieu de la recherche | Date d'achèvement de la recherche | Examinateur |
|---|---|---|
| LA HAYE | 15 JUILLET 1992 | AYITER I. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)